# EUROPEAN PATENT APPLICATION

(11) **EP 0 694 594 A2**
(43) Date of publication of application: **31.01.1996**
(21) Application number: 95305216.4
(22) Date of filing: 26.07.1995
(51) Int. Cl.: C09D 11/00

(54) **Liquid ink, method for image formation using the ink, and ink jet printer**

(30) Priority: 26.07.1994 JP 174171/94; 23.08.1994 JP 198172/94
(71) Applicant: HITACHI, LTD., Chiyoda-ku, Tokyo 100 (JP)
(72) Inventor: Hiroshi, Sasaki, Suwama, Tokaimura, Naka-gun, Ibaraki-ken (JP); Iwasaki, Kishiro, Hitachiota-shi (JP); Murao, Kenji, Hitachi-shi (JP); Isaogai, Masato, Mito-shi (JP); Yokokura, Hisao, Hitachi-shi (JP); Iwakabe, Yasushi, Mobara-shi (JP); Miwa, Takao, Hitachinaka-shi (JP); Okabe, Yoshiaki, Hitachi-shi (JP)
(74) Representative: Hackney, Nigel John

(57) **Abstract**

Provided are an ink high in fixability of image, water resistance and solvent resistance though it is a liquid ink containing water as a solvent and a quick-drying ink jet printer which uses said ink. The liquid ink of the present invention is a liquid ink used for ink jet printers which contains a binder, a colorant and a solvent, characterized in that it contains at least 10% by weight of water and the binder comprises a polyamic acid salt or at least one species of photo-curable resin. The ink jet printer is characterized by being provided with a device for fixing the image formed on a paper by heating or light irradiation. Although water is used as the solvent, the image can be more rapidly fixed as compared with air-drying of the image and, besides, there are no risks of fire caused by ignition. Thus, the ink jet printer of the present invention is useful for use in offices.

## Description

### BACKGROUND OF THE INVENTION

The present invention relates to a liquid ink, an ink jet printer using the ink, and a method for forming images using the ink.

Hitherto, in image formation using a liquid ink, for example, in ink jet recording system, the ink is allowed to adhere to a medium such as paper, and, then, the image is fixed by air-drying or heat-drying. As solvents for quick-drying inks, organic solvents of low boiling point (such as n-hexane and n-octane) have been used, but these solvents cannot be used in offices owing to the problems of fire risk and intoxication caused by inhalation, and water or solvents containing water have been solely used.

When solvents for liquid inks contain water, there is the problem of taking a long time for drying the resulting images. Furthermore, the images after dried melt upon contacting with water such as sweat and the images are damaged, and, thus, there is the problem in retention of images. Moreover, when the images formed in offices are carried into the sites such as factories where organic solvents are present, if the solvents are inadvertently stuck to the images, the images melt and are damaged.

### BRIEF DESCRIPTION OF THE DRAWINGS

Fig. 1 is a sideward sectional view of an ink jet printer of the present invention.

Fig. 2 is a sideward sectional view of other ink jet printer of the present invention.

Fig. 3 is a sideward sectional view of other ink jet printer of the present invention.

Fig. 4 is a schematic sideward sectional view of a light source.

Fig. 5 is a schematic top sectional view of an ink jetting device.

### SUMMARY OF THE INVENTION

Preferably the present invention provides a liquid ink which contains water in its solvent, is excellent in fixability, water resistance and solvent resistance and is suitable for forming images of high storage stability, an ink jet printer suitable for using the ink, and a method of image formation using the ink.

As a result of intensive research in an attempt to solve the above problems, the inventors have found at least that some of the problems can be mitigated by using a water-soluble polyamic acid salt as one of binders contained in the ink used and by heating unfixed images at the time of formation of the images to convert the binder to a polyimide.

### DESCRIPTION OF THE INVENTION

That is, the liquid ink of the present invention is a liquid ink for ink jet printer which comprises a colorant, a binder for binding the colorant on a medium such as paper (the medium may be referred to as merely "paper" hereinafter) and a solvent to disperse the colorant and the binder, characterized in that it contains 10-90% by weight of water based on the total amount of the ink and the binder comprises a polyamic acid salt. The ink preferably contains the binder in an amount of 1-60% by weight based on the total amount of the ink.

The ink jet printer of the present invention is characterized in that it is composed of a paper feed roll which feeds a paper, an ink jetting device which jets a liquid ink onto the paper to form an image thereon, a fixing device which fixes the image formed on the paper by heating the image while nipping and carrying the paper bearing the image, and a controlling device which controls working of the feed roll and the respective devices, and the liquid ink of the present invention is used as the said liquid ink.

The method of image formation by jetting a liquid ink onto a paper of the present invention is characterized in that the above-mentioned liquid ink of the present invention is used as the liquid ink and the formed image is subjected to a fixing treatment which comprises heating the image formed on the paper while carrying the paper nipped by roll or belt thereby to convert the polyamic acid salt to a polyimide.

The binder which characterizes the present invention will be explained below in more detail.

As the binder in the ink of the present invention, a polyamic acid salt which is a precursor for polyimides is used. In order to obtain the polyamic acid salt, it is first necessary to prepare a varnish of a polyamic acid.

An industrially most suitable process for preparing the varnish of polyamic acid comprises polymerizing with stirring equimolar tetracarboxylic acid dianhydride and diamine in a polar solvent such as DMF, NMP or the like as described in C.E. Sroog, A.L. Endrey, S.V. Abramo, C.E. Berr, W.M. Edwards, K.L. Olioier, J. Polymer Sci., A-1, 3, 1375 (1965). The resulting polyamic acid varnish is introduced into water and stirred, followed by removing the polar solvent such as DMF or NMP and then drying to obtain a polyamic acid. This is reacted with an amine in an amount of 0.5-2 mols per 1 mol of the polyamic acid in water to prepare a polyamic acid salt. The polyamic acid salt can also be prepared using two or more polyamic acids.

The tetracarboxylic acid dianhydrides necessary for synthesis of polyamide acids include, for example, benzophenone-3,3',4,4'-tetracarboxylic acid dianhydride, diphenylsulfone-3,3',4,4'-tetracarboxylic acid dianhydride, 4,4'-(hexafluoroisopropylidene)phthalic acid dianhydride, 3,3',4,4'-biphenyltetracarboxylic acid dianhydride, 3,3'',4,4''-p-terphenyltetracarboxylic acid dianhydride, diphenyl ether-3,3',4,4'-tetracarboxylic acid dianhydride, pyromellitic acid dianhydride, trifluoromethylpyromellitic acid dianhydride, and bis(trifluoromethyl)pyromellitic acid dianhydride.

The diamines include, for example, o-tolidine, p-phenylenediamine, 2,4-diaminodiphenyl ether, 4,4'-diaminodiphenyl ether, 4,4'-diaminodiphenylsulfone, 4,4'-diaminodiphenylmethane, 4,4'-diaminodiphenyl sulfide, 4,4''-diaminoterphenyl, 4,4''-diaminodicyclohexylmethane, 1,5-diaminonaphthalene, 4,4'-bis(p-aminophenoxy)biphenyl, 4,4'-bis(m-aminophenoxy)diphenylsulfone, 2,2-bis(4-(p-aminophenoxy)phenyl)propane, 3,3'-dimethyl-4,4'-diaminodiphenylmethane, 2,7-diaminofluorene, acetoguanamine, 3,3'-dimethoxybenzidine, m-phenylenediamine, 2,2-bis(4-(p-aminophenoxyphenyl)hexafluoropropane, 2,6-diaminoanthraquinone, 1,4-diaminodurene, 2,6-aminotoluene, 2,5-diaminopyridine, 2,6-diaminopyridine, 2,5-diaminotoluene, 2,3-diaminopyridine, 3,4-diaminopyridine, 4,4'-diaminobenzophenone, 4,4'-bis(p-aminophenoxy)diphenylsulfone, benzoguanamine, 2,7-diaminonaphthalene, 3,4-diaminotoluene, m-xylenediamine, p-xylenediamine, 4,4'-dithiodianiline, o-phenylenediamine, and 4,4'-methylenebis(2-methylcyclohexylamine).

Solvents used for synthesis of the polyamic acid include, for example, NMP and DMF. These may be used each alone or in admixture of two or more.

Molecular weight of the polyamide acid relates to the strength of the polyimide which is a binder in the fixed images and the number-average molecular weight (in terms of polystyrene) is preferably 10,000-30,0000 measured by GPC (gel permeation chromatography). If the molecular weight is lower than 10,000, the strength of polyimide is insufficient, and if it is higher than 300,000, viscosity of the ink is too high to use as ink for ink jet printers.

The amines which form salts with polyamic acids include, for example, 2,2-dimethylaminoethanol, 2,2-diethylaminoethanol, 2-methylaminodiethanol, 1,1-dimethyl-3-butanone, 1,1-diethylamino-acetone, N-ethylaminodiethanol, N-methylaminoethanol, 2,2-aminodiethanol, 3-diethylamino-1-propanol, and aminocyclohexane. These may be used each alone or in combination of two or more. From the point of stability, these are preferably purified by distillation in a nitrogen atmosphere before use.

However, when the polyamic acid salts are prepared using the following amines, they are not preferred as binders for inks owing to their low solubility, high viscosity of ink, inferior storage stability of ink, and emission of offensive odor. Methylamine, ethylamine, propylamine, butylamine, pyridine, triethanolamine, diethanolamine, monoethanolamine, N-methylmorpholine, morpholine, piperazine, picoline, diethylenediamine, diethylamine, 2-diethylaminoethyl-methacrylate.

The colorants used in the ink are not critical, but preferably those which have a high heat resistance since they contact with a heat source at the time of fixation.

Furthermore, as a result of intensive research in an attempt to solve the above-mentioned problems, the inventors have found that the problems can be solved by using a water-soluble photo-curable resin as one of the binders contained in the ink and by irradiating the formed images with a light.

The aspects of the present invention for solving the problems will be explained.

As the first aspect, the inventors have made an invention relating to an ink comprising at least a binder, a colorant and a solvent, characterized in that the binder contains at least one photo-curable resin and the solvent contains water in an amount of 50% by weight or more based on the ink.

As the second aspect, the inventors have made an invention relating to an ink comprising at least a binder, a colorant and a solvent, characterized in that the binder contains at least one heat-curable resin and the solvent contains water in an amount of 50% by weight or more based on the ink.

As the third aspect, the inventors have made an invention relating to the first aspect mentioned above, characterized in that the photo-curable resin contains a cinnamate.

As the fourth aspect, the inventors have made an invention relating to a method for image formation by ink jetting system, characterized in that an ink which contains at least one species of photo-curable resin as a binder and contains water in an amount of 50% by weight or more based on the ink as a solvent is used, and the method includes a step of irradiating with light the image formed by adhesion of the ink.

As the fifth aspect, the inventors have made an invention relating to a method for image formation by ink jetting system, characterized in that an ink which contains at least one heat-curable resin as a binder and contains water in an amount of 50% by weight or more based on the ink as a solvent is used, and the method includes a step of heating the image formed by adhesion of the ink.

As the sixth aspect, the inventors have made an invention relating to the fourth aspect mentioned above, characterized in that the photo-curable resin contains a cinnamate.

As a seventh aspect, the inventors have made an invention relating to an ink jet printer, characterized by having a light source used for irradiating with light the image formed by adhesion of the ink.

As an eighth aspect, the inventors have made an invention relating to an ink jet printer comprising at least an ink jetting device, a carrying roll for paper and a light source, characterized in that an ink is adhered by the ink jetting device on a paper carried by the carrying roll to form an image and then, the image is irradiated with light by the light source to fix the image.

As the ninth aspect, the inventors have made an invention relating to an ink jet printer comprising at least an ink jetting device, a carrying roll for paper and a light source, characterized in that the light source is provided between the ink jetting device and the carrying roll for carrying the printed paper to the outside of the ink jet printer.

As the tenth aspect, the inventors have made an invention relating to the eighth and ninth means mentioned above, characterized in that the ink jetting device is made of a material having a transmittance of 2% or less for a light of 200 to 400 nm in wavelength.

As the eleventh aspect, the inventors have made an invention relating to the eighth and ninth means mentioned above, characterized in that a condenser lens is fitted to the light source.

As the binder in the ink, suitable are water-soluble photo-curable resins or heat-curable resins which are soluble in water or highly dispersible in water before irradiation with light and which cure by irradiation with light or by the heat generated due to the irradiation with light.

Furthermore, some amount of other resin component may be added as a part of the binder for adjusting properties such as elasticity and plasticity of the ink. As the photo-curable resins, it can be considered to use those which have a main chain having a substituent such as cinnamate capable of inducing a crosslinking reaction with heat.

Examples of these resins are those which have in an alkyl chain the substituents which contain alkali metals such as substituted or unsubstituted lithium cinnamate, sodium cinnamate, potassium cinnamate, rubidium cinnamate and cesium cinnamate, the substituents which contain alkaline earth metals such as substituted or unsubstituted magnesium cinnamate, calcium cinnamate, strontium cinnamate and barium cinnamate, or the substituents which contain ammonium ions such as substituted or unsubstituted ammonium cinnamate and tetramethylammonium cinnamate.

Furthermore, photo-sensitizers such as benzophenone may be used for allowing the photo reaction to proceed smoothly. In the case of a resin having a cinnamate as the substituent, the anion portion, namely, cinnamate ion portion is the reaction site in photo-curing, but the cation portion may also be the reaction site.

As examples thereof, mention may be made of salts of polyacrylic acids and 2'-dialkylaminoalkoxycarbonylalkenes. The 2'-dialkylaminoalkoxycarbonylalkenes bring about a reaction of crosslinking of double bond in the molecule like cinnamic acid upon irradiation with ultraviolet rays.

Besides the 2'-dialkylaminoalkoxycarbonylalkenes, there may be used compounds having a site in the molecule which causes reaction with amino group by light. Examples are p-aminocinnamate esters. In addition to the polyacrylic acids, there may also be used, for example, polyvinyl chloride having a carboxyl group in a part of the alkyl chain.

Concentration of the binder in the ink of the present invention is preferably 50-1% by weight. If the concentration is more than 50% by weight, viscosity of the ink is too high to use as ink for ink jet printers, resulting in a problem in image formation. If it is less than 1% by weight, pin holes are apt to be formed in the resulting image.

The viscosity of the ink of the present invention is preferably lower. This is because the minimum spot in image formation can be made smaller. Specifically, the viscosity is desirably 20 centipoises or lower.

The colorants in the ink are unlimited, but preferred are those of high light resistance since the image is irradiated with light in fixing.

The medium which disperses the binder and the colorant in the ink used in the present invention is preferably a solvent mainly composed of water, and, if possible, comprising only water in view of fire risk or environmental problems. However, in case the additives such as the binder and the colorant cannot be well dispersed in the medium, it can be considered to use some amount of an organic solvent. The organic solvent used in this case is preferably one which is highly miscible with water. Furthermore, in order to avoid a fire as much as possible, the organic solvent preferably has a high ignition point. From such viewpoint, alcoholic organic solvents such as ethanol are preferred than ether organic solvents such as tetrahydrofuran. In this case, too, it is necessary that at least 10% by weight of water be contained in the ink in order to avoid the fire risk due to ignition.

Since the liquid ink of the present invention contains a binder comprising a polyamic acid salt, reactions of dehydration and removal of base take place in the polyamic acid salt at the time of heating for fixing the image formed on the paper, and the polyamic acid salt is converted to a polyimide. The polyimide is insoluble in not only water, but also most of organic solvents and has a heat resistance of several hundred degrees, and, therefore, the image is excellent in storage stability and thus, the ink is effective for long-term storage of image. Moreover, since the polyamic acid salt which is a precursor for the polyimide is soluble in water. Using water as a dispersing medium of ink, there are no risks of fire and toxication with organic solvents.

When concentration of the binder in the liquid ink of the present invention is higher than 50% by weight, viscosity of the ink extremely increases and formation of images is difficult. When it is lower than 1% by weight, pinholes are apt to be formed in the polyimide film. Moreover, when content of water in the liquid ink is more than 10% by weight, this is effective for inhibiting ignition. When it exceeds 90%, surface tension of the ink decreases and the contact angle of the ink with the print surface increases, resulting in decrease of resolution of the image after fixed.

The ink jet printer of the present invention has a fixing device which carries out heating of unfixed image. This is for converting the polyamic acid salt, which is the binder to a polyimide to carry out curing of the ink.

The ink jet printer of the present invention has a light source for irradiation of images with light. This is because a resin which cures by irradiation with light is used as one of binders in the ink of the present invention. As this resin, a photo-curable resin which cures by the light irradiated is mainly used, but this may be a heat-curable resin which cures by the heat of heat energy to which the irradiated light is converted mainly by the colorant in the ink which absorbs the light. By employing this method, images excellent in water resistance and storage stability can be provided.

Embodiments of the present invention will now be explained, by way of example, with reference to the accompanying drawings:

### Example 1

Preparation of a liquid ink of the present invention will be explained.

First, an aqueous solution containing a polyamic acid salt as a binder was prepared. That is, pyromellitic acid dianhydride (218 parts by weight) as a tetracarboxylic acid dianhydride was dissolved in NMP (2,000 parts by weight) as a solvent. Then, to the solution was added p-phenylenediamine (94 parts by weight) as a diamine, followed by stirring for 8 hours at 20°C to obtain a polyamic acid varnish having a viscosity of about 100 centipoises. The resulting varnish was added dropwise to water (10,000 parts by weight) under vigorous stirring, and the precipitated solid was subjected to filtration. Then, Soxhlet extractor was used for removing NMP from the resulting solid. That is, the solid was put in an extraction thimble of Soxhlet extractor. This thimble was set to the Soxhlet extractor and extraction was carried out for 8 hours using water as a solvent. Then, the thimble containing the solid was subjected to vacuum drying to completely remove water to obtain polyamic acid.

Then, the polyamic acid (15 parts by weight) and 1,1-dimethylamino-3-butanone (15 parts by weight) were added to water (70 parts by weight). Subsequently, the aqueous mixture was stirred for 5 hours to obtain 30 wt% aqueous solution of polyamic acid salt.

Next, preparation of the portion (colorant and a part of solvent) other than the binder in the ink of the present invention will be shown. Polyvinyl alcohol (polymerization degree 2,000) (1 part by weight) and polyvinylpyrrolidone (polymerization degree 40,000) (1 part by weight) were dissolved in a heated distilled water (10 parts by weight). Then, to the solution was added carbon black (furnace black: average particle size 50 nm) (10 parts by weight) as a colorant, followed by well admixing them by a ball milling apparatus. To the thus obtained pasty liquid was added a 30 wt% aqueous solution of the polyamic acid salt mentioned above (100 parts by weight) and they were well mixed to obtain a liquid ink of the present invention.

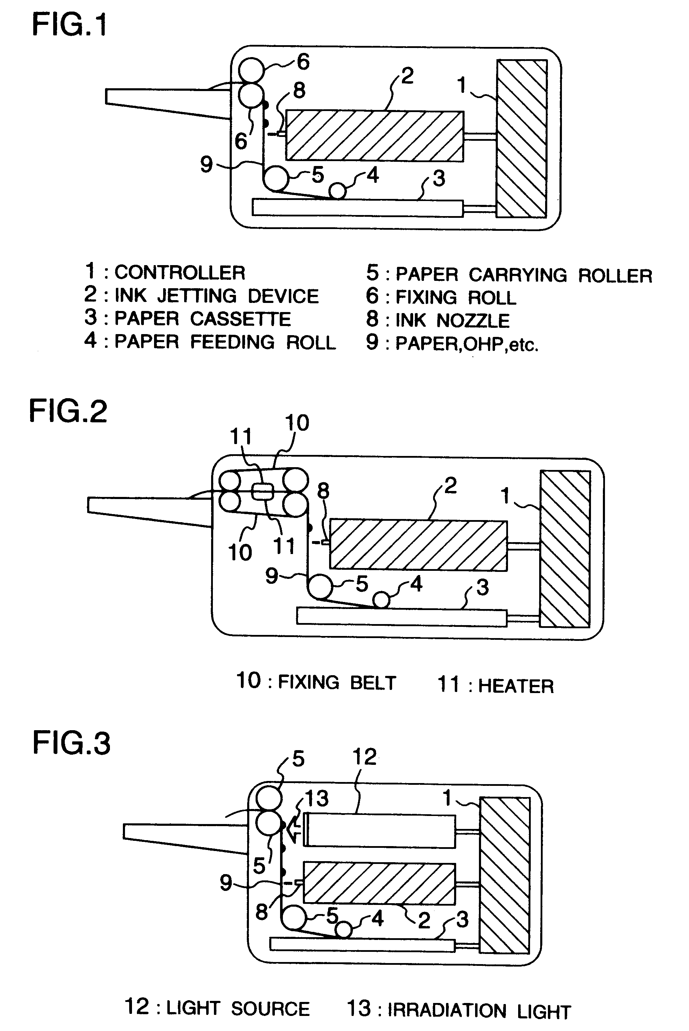

The liquid ink was charged in the ink jetting device of the ink jet printer shown in Fig. 1, and an image was formed by this printer. This ink jet printer was composed of paper feed roll 4 for feeding one by one the papers 9 stored in paper cassette 3, carrying roll 5 for carrying the papers 9 by successively and slightly moving them, ink jetting device 2 for jetting an ink on the carried paper 9 from ink nozzle 8 to draw an image, a pair of fixing rolls 6, 6 for fixing the image formed on the paper by heating, and controller 1 for controlling process of movement and ink jetting of the ink nozzle 8 and action of the fixing rolls 6. Furthermore, as shown in Fig. 2, the fixing means may be constituted of a pair of belts 10 and heater 11 for heating the belts in place of the fixing rolls 6, 6 shown in Fig. 1. The fixing rolls 6 have a heater built-in. In Figs. 1 and 2, the mechanism for fixing is fitted to the body of the printer, but this may be separated from the printer body. In Fig. 1, the two fixing rolls contact with each other and in Fig. 2, the two fixing belts contact with each other, but a spacing may be provided between the fixing rolls or the fixing belts, thereby to avoid contact of unfixed image with the fixing rolls or belts and prevent reduction of resolution of the image.

The image formed by the ink jet printer was subjected to the fixing treatment by the fixing rolls 6, 6 having a surface temperature of 180°C.

Then, the image was subjected to the following peeling test to evaluate the fixability of the image. That is, a drafting tape (TZ4121 manufactured by Kokuyo Co., Ltd.) was applied to the image after fixed, and then the tape was peeled in such a manner that the paper was not damaged. As a result, a slight amount of ink adhered to the tape, but the image hardly deformed. On the other hand, when an image formed on the paper taken out without subjecting to the fixing treatment was subjected to the same peeling test, more than twice amount of the ink that adhered from the image after fixed to drafting tape was adhered, and the image subjected to the test deformed. From the results, it was confirmed that the image was fixed by the heating with the fixing rolls.

Next, the following test was conducted to evaluate the water resistance of the image. The paper on which an image was printed subjected to the fixing treatment was dipped in water and then was dried by air. The paper crumpled, but the image was not substantially damaged. On the other hand, when the paper on which the image was printed taken out without subjecting to the fixing treatment was dipped in water in the same manner as above, the image dissolved into water and faded after dried. From the results, it was confirmed that water resistance of the image was improved by the above fixing treatment of the image.

Next, the following test was conducted to evaluate the solvent resistance of the image. The paper on which an image was printed subjected to the fixing treatment was dipped in ethanol and then, was dried by air. The image was not substantially damaged either. When solvents such as acetone, chloroform, tetrahydrofuran and DMF were used in place of ethanol, the image also showed substantially no change. From the results, it was confirmed that organic solvent resistance of the image was improved by the fixing treatment of the image.

### Example 2

An image was formed by using the ink jet printer shown in Fig. 2 in place of the ink jet printer shown in Fig. 1. The resulting image was subjected to the same peeling test and water resistance test as conducted in Example 1. As in Example 1, the image subjected to the fixing treatment by the fixing belts was superior to the image subjected to no fixing treatment in fixability and water resistance.

### Example 3

An aqueous solution of polyamic acid salt was prepared using 2,2-dimethylaminoethanol (12 parts by weight) in place of 1,1-dimethylamino-3-butanone (15 parts by weight) used in Example 1 as an amine. A liquid ink was prepared in the same manner as in Example 1 using the aqueous solution of the polyamic acid salt. An image was formed in the same manner as in Example 1 using the above liquid ink. The image was subjected to the peeling test and the water resistance test. As a result, as in Example 1, the image subjected to the fixing treatment by the fixing rolls was improved in fixability and water resistance as compared with the image subjected to no fixing treatment.

### Example 4

An image was formed in the same manner as in Example 1, except that an aluminum foil (thickness: 20 µm) was used as the paper on which the image was to be formed. The image was subjected to the peeling test and the water resistance test. As a result, as in Example 1, the image subjected to the fixing treatment by the fixing rolls was improved in fixability than the image subjected to no fixing treatment. The aluminum foil bearing the image subjected to the fixing treatment was dipped in ethanol and then, was dried by air. The image was not substantially damaged. When solvents such as acetone, chloroform, tetrahydrofuran and DMF were used in place of ethanol, the image was not substantially damaged either. From the results, it was confirmed that organic solvent resistance of the image was improved by the fixing treatment.

Then, the aluminum foil was heated for 100 hours in a thermostatic chamber of 300°C. After heating, the image was not damaged.

### Example 5

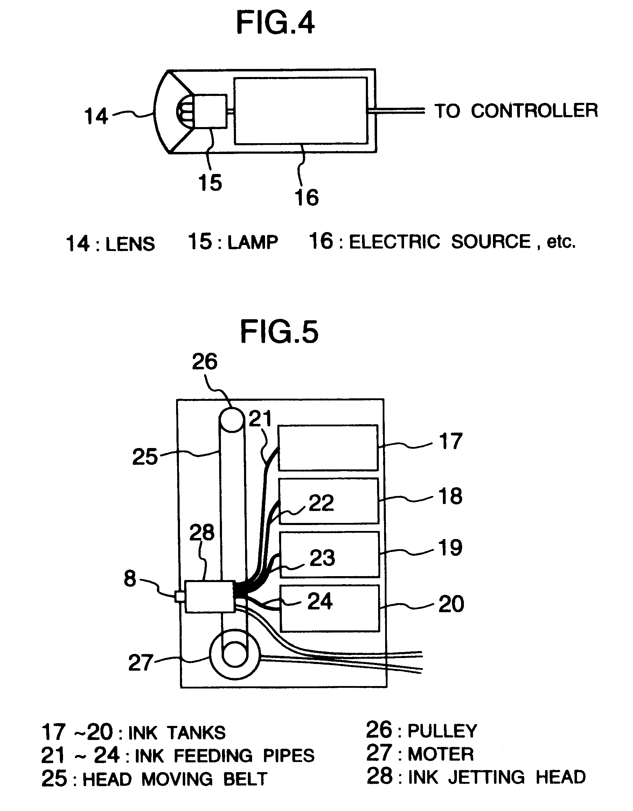

As another example of the ink jet printer of the present invention, mention may be made of one shown in Fig. 3. The light source portion 12 and the ink jetting device 2 are explained in more detail in Figs. 4 and 5. The light is irradiated after jetting the ink onto a paper or the like. Therefore, in the case of the printer of Fig. 3, the paper moves upward in image formation and, therefore, the light source 12 is positioned above the ink jetting device 2.

The light to be irradiated must contain a special light whose wavelength can cure the ink used. For example, when only a photo-curable resin is used as the binder in the ink, the light to be irradiated must contain a special light whose wavelength can cure the photo-curable resin in the ink.

When the ink contains a heat-curable resin as the binder, it is effective to irradiate a light whose wavelength is in the absorption wavelength's area of the component such as colorant in the ink. After absorbed light, the component is converted the light energy to heat energy, and the energy cure the heat-curable resin. According to this method, it is possible to use a light source capable of irradiating a light of from near infrared region to near ultraviolet region. However, care must be taken since some inks undergo changes such as discoloration and fading due to irradiation with light.

As the light source 12 emitting the above light, there are mercury lamps often utilized for curing of photo-curable resins, xenon lamps using filters for selection of wavelengths in front of the light-emitting part, and the like. When these lamps are used, there are needed a power supply for lighting, an electric source 16 for stable lighting with a given light volume, a fan for cooling the lamps, etc. Furthermore, by providing a condenser lens 14 at the lamp 15, it becomes possible to efficiently irradiate the portion which needs to be irradiated with light. In Fig. 4, the light source is lamp 15, but lasers such as a semiconductor laser, a helium-neon laser, etc. may be used as the light source 12 as far as the wavelength is satisfied.

It is not needed to cure 100% of the binder, but the light energy to be irradiated must be need to cure the binder to such an extent that the resulting image does not deform by normal use (superposing the papers, touching with hand, etc.). Therefore, it is necessary to regulate the light energy that varies depending on the kind of binder and colorant and amount.

The ink jetting device 2 is a device for jetting ink onto the paper, OHP, etc., and ink tanks 17, 18, 19 and 20, ink jetting head 28, etc. are incorporated therein. In Fig. 5, there are four ink tanks 17, 18, 19 and 20, taking into consideration full color printing. In the case of monochromatic printing, the ink tank is only for black, and the number of ink tank is one. The ink tanks 17, 18, 19 and 20 must be shielded from light so that the inks do not cure. The shielded wavelength region must contain the wavelength region whose light can cure the binder in the ink. In general, it is necessary to shield the tanks from the light of about 200-800 nm in wavelength. When the tanks are shielded from light using a material having a transmittance of 2% or less for the light of 200-400 nm in wavelength, crosslinking of the photo-curable resin can be inhibited. For example, the ink tanks 17, 18, 19 and 20 can be covered with a metal such as stainless steel, brass or the like or the ink tanks per se can be made of a metal, resin, glass, etc. which hardly transmits the light. Transfer of the inks from the ink tanks to the ink jetting head 28 is carried out through ink feeding pipes 21, 22, 23 and 24. A feeding pump is not particularly needed as far as air does not enter the pipes. However, a pump is needed if the ink is jetted at a high speed or air enters the pipes owing to the structure. (The pump is not shown in Fig. 5.) In this case, the pump is suitably positioned between the ink jetting head 28 and the ink tanks 17, 18, 19 and 20. Furthermore, the pump can be provided in contact with the ink tanks. If the pump is fitted to the ink jetting head 28, weight of the head increases and it may be difficult to move the head.

Ink feeding pipes 21, 22, 23 and 24 must also be shieled from light so that the ink does not cure. In order to shield the pipes from light, the pipes can be colored with a colorant which absorbs the light of the wavelength necessary to crosslink the binder in the ink not so as to transmit the light. It can also be considered to wind an aluminum foil, etc. around the pipes. However, there is no particular problem if the pipes are only shielded from the light of the wavelength with which the ink is cured.

If the whole of the ink jetting device 2 can be shielded from light, there is no need to shield from light the ink tanks 17, 18, 19 and 20 or the ink feeding pipes 21, 22, 23 and 24. The ink jetting device can be shielded from light in the same manner as for ink tanks 17, 18, 19 and 20.

The ink jetting head 28 jets the ink upon receiving the instructions from controller 1. The jetting is carried out by ink jet systems, for example, using a pump or utilizing the volumetric change caused by heat. The number of the ink nozzle 8 provided at the tip of the ink jetting head 28 is the same as or more than the number of inks. When the nozzles 8 are arranged in transverse direction, it is necessary to adjust moving belt 25 for the head 28, pulley 26, and motor 27 so that the inks can also be jetted onto the edge portion of the paper. In the case of the nozzles 8 being arranged in transverse direction, the method for feeding of papers must be adjusted so that the inks can also be jetted onto the edge portion of the paper. The head 28 is desirably as light as possible in weight because it moves at a considerably high speed. Furthermore, it is also desired that the head is made of a material which is not corroded with water which is a main solvent of the ink. In view of these two points, it can be considered to use aluminum oxide and the like as the material of the head 28.

The material of the head moving belt 25 may be rubbers, metals, etc. The metals are higher in durability than rubbers, but they tend to produce noises. The motor 27 and pulley 26 may be those which are used in the printers of ordinary ink jet systems.

### Example 6

An ink of the present invention was prepared in the following manner.

First, preparation of a binder of the liquid ink of the present invention will be shown. Phosphorus oxychloride (50 parts by weight) was added dropwise to N-methylformanilide (50 parts by weight). After lapse of 20 minutes from completion of the addition, polystyrene (25 parts by weight) was added thereto, followed by stirring at 90°C for 5 hours. The reactor was cooled and then, water (500 parts by weight) was added thereto, and the mixture was sufficiently stirred and extracted with chloroform. The chloroform layer was well washed with a saturated sodium chloride solution, concentrated under reduced pressure, and added dropwise to methanol under stirring to precipitate a solid. This was a crude product of a resin comprising polystyrene having the aromatic ring into which a formyl group was introduced. A procedure of dissolving the crude product in chloroform and adding dropwise the solution to methanol (hereinafter referred to as "reprecipitation process") was repeated several times and, thereafter, the product was sufficiently dried to obtain a purified product of a resin comprising polystyrene having the aromatic ring into which a formyl group was introduced (yield: 20 parts by weight).

The total amount (20 parts by weight) of the resin obtained by the above procedure was dissolved in pyridine (100 parts by weight), and malonic acid (14 parts by weight) was added thereto, followed by heating the mixture to 50°C. Piperizine (1 part by weight) was added to the mixture. Then, the mixture was stirred at 80°C for 2 hours, and, thereafter, refluxed for 6 hours. The mixture was cooled to room temperature and poured in water (500 parts by weight) and, then, this liquid was acidified with 10% hydrochloric acid. The resulting solid was washed with 5% hydrochloric acid and well washed with water until the water used for washing becomes neutral. The reprecipitation process with chloroform and methanol was repeated several times, followed by sufficient drying to obtain a purified product of a resin comprising polystyrene having the aromatic ring into which a CH=CH-CO₂H group was introduced (yield: 15 parts by weight).

This resin was dissolved in tetrahydrofuran (100 parts by weight), and the solution was added dropwise to a 3 wt% aqueous sodium hydroxide solution (100 parts by weight) until this was neutralized. After the neutralization, the aqueous solution was dried under reduced pressure to obtain a resin comprising polystyrene having the aromatic into which a CH=CH-CO₂Na group was introduced (yield: 12 parts by weight). This was a binder of the ink in this Example.

Next, preparation of an ink of the present invention will be shown. Polyvinyl alcohol (polymerization degree 2,000) (1 part by weight) and polyvinylpyrrolidone (polymerization degree 40,000) (1 part by weight) were dissolved in a heated distilled water (10 parts by weight). Then, to the solution was added carbon black (furnace black: average particle size 50 nm) (10 parts by weight), followed by well admixing them by a ball milling apparatus. To the thus obtained pasty liquid was added a 10 wt% aqueous solution (100 parts by weight) of the resin comprising polystyrene having the aromatic ring into which a CH=CH-CO₂Na group was introduced and they were well mixed to prepare a liquid ink of the present invention.

The liquid ink was charged in the ink tank in the ink jetting device of the ink jet printer shown in Fig. 3.

An image was formed on the paper delivered from the paper cassette 3 with the ink jetted from the ink nozzle 8. Then, the thus formed image was irradiated with a light at perpendicular to the image. The irradiation light source 12 was a 500 W high pressure mercury lamp manufactured by Ushio Elelctric Co., Ltd. The irradiation light volume was 10 mW/cm for the image.

Then, the image was subjected to the following peeling test to evaluate the adherence of the ink of the image. That is, a drafting tape (TZ4121 manufactured by Kokuyo Co., Ltd.) was applied to the image after irradiated with light, and then the tape was peeled in such a manner that the paper was not damaged. As a result, a slight amount of ink stuck to the tape, but the image hardly deformed. On the other hand, when an image formed on the paper taken out without subjecting to the process of light irradiation was subjected to the same peeling test, the ink stuck to the tape in an amount more than twice the amount when the image was irradiated with light, and the image subjected to the test deformed. From the results, it was confirmed that the image was improved in adherence of ink by irradiation with light.

Next, the following test was conducted to evaluate the water resistance of the image. The paper bearing an image fixed thereon was dipped in water contained in a vat and, then, air-dried. The paper had some crumples, but the image showed substantially no change. On the other hand, when the paper bearing the image taken out without subjecting to the process of light irradiation was dipped in water in the same manner as above, the image dissolved into water and got blurred after air-dried. From the results, it was confirmed that water resistance of the image was improved by the irradiation with light.

### Example 7

An ink containing a derivative of polyacrylic acid as a binder was prepared in the following manner.

First, preparation of the binder will be shown. A 10 wt% solution of 2'-diethylaminoethoxycarbonyl-l-propene in tetrahydrofuran was added dropwise to a 10 wt% aqueous polyacrylic acid solution (300 parts by weight) until the mixture was neutralized. After the neutralization, the aqueous solution was dried under reduced pressure to obtain a polyacrylic acid 2'-diethylaminoethoxycarbonyl-1-propene salt (yield: 35 parts by weight). The compound was used as the binder of the ink of this Example.

A liquid ink was prepared in the same manner as in Example 6, except that a 10 wt% aqueous solution of polyacrylic acid 2'-diethylaminoethoxycarbonyl-1-propene salt (100 parts by weight) was used in place of the 10 wt% aqueous solution of the resin comprising polystyrene having the aromatic ring into which a CH=CH-CO₂Na group was introduced (100 parts by weight).

In the same manner as in Example 6, an image was formed using the resulting liquid ink, and, thereafter, the image was subjected to the peeling test and the water resistance test to find that the image subjected to the light irradiation was improved in ink adherence and water resistance as in Example 6.

### Example 8

An ink containing a derivative of polyacrylic acid differing in chemical structure from that of Example 7 as a binder was prepared in the following manner.

First, preparation of the binder will be shown. Ethyl cinnamate (18 parts by weight) was dissolved in chloroform (100 parts by weight), and acetic acid (50 parts by weight) was added to the solution. Then, under ice cooling, thereto was added dropwise 60% nitric acid (20 parts by weight) for 2 hours. After stirred at room temperature for 2 hours, the reaction mixture was rendered neutral with a saturated aqueous sodium carbonate solution and, then, was transferred to a separatory funnel, and the chloroform layer was gained. The chloroform layer was washed with a saturated aqueous sodium chloride solution several times and dried under reduced pressure to obtain a solid. This solid was recrystallized from ethyl acetate and n-hexane to obtain ethyl p-nitrocinnamate (15 parts by weight). This product was dissolved in DMF (100 parts by weight), and palladium carbon (0.01 parts by weight) was added to the solution. The mixture was set in a hydrogen generator and stirred for 1 hour after hydrogen was charged in the reactor. This procedure was for reducing nitro group of the ethyl p-nitrocinnamate. The reactor was removed from the hydrogen generator, and the reaction mixture was filtered by a glass filter of G4 to remove the palladium carbon. Thereafter, DMF was evaporated under reduced pressure, and the resulting solid was recrystallized from ethyl acetate and n-hexane to obtain ethyl p-aminocinnamate (10 parts by weight). Then, an ink of this Example was prepared in the same manner as in Example 7, except that the aqueous polyacrylic acid solution was neutralized using 10 wt% ethyl p-aminocinnamate in place of 10 wt% solution of 2'-diethylaminoethoxycarbonyl-1-propene in tetrahydrofuran used in Example 7.

In the same manner as in Example 6, an image was formed using the resulting liquid ink, and, thereafter, the image was subjected to the same peeling test and water resistance test to find that the adherence of ink and water resistance of the image were improved by the irradiation with light as in Example 7.

### Example 9

An image was formed in the same manner as in Example 6, except that the paper on which the image was formed was replaced with an aluminum foil (thickness: 20 µm), and subjected to the peeling test and the water resistance test to find that the adherence of ink and the water resistance of the image were improved by the light irradiation as in Example 6.

The aluminum foil on which the image was printed irradiated with ink was dipped in ethanol and was dried by air. The image was not substantially damaged. The image was not substantially damaged either when solvents such as acetone, chloroform, tetrahydrofuran and DMF were used in place of ethanol. From the results, it was also confirmed that organic solvent resistance of the image was improved by fixing the image with light irradiation.

## Claims

1. A liquid ink for ink jet printer comprising a colorant, a binder for binding the colorant to a paper and a solvent to disperse the colorant and the binder wherein the ink contains 10-90% by weight of water based on the total amount of the ink, and the binder comprises a polyamic acid salt.

2. A liquid ink according to claim 1 which contains the binder in an amount of 1-50% by weight.

3. An ink jet printer which comprises a feed roll for feeding a paper, an ink jetting device for jetting a liquid ink onto the paper to form an image thereon, a fixing device for fixing the image by heating while nipping and carrying the paper on which the image is printed, and a controlling device for controlling working of the feed roll and the devices, said liquid ink comprising a colorant, a binder comprising a polyamic acid salt for binding the colorant to a paper, a solvent to disperse the colorant and the binder, and water in an amount of 10-90% by weight based on the total amount of the ink.

4. A method for forming an image by jetting a liquid ink onto a paper wherein a liquid ink comprising a colorant, a binder comprising a polyamic acid salt for binding the colorant to a paper, a solvent to disperse the colorant and the binder, and water in an amount of 10-90% by weight based on the total amount of the ink is used as the liquid ink and the formed image is subjected to a fixing treatment which comprises heating the paper on which the image is printed while carrying the paper nipped by roll or belt to convert the polyamic acid salt to a polyimide.

5. An ink comprising at least a binder, a colorant and a solvent which contains at least one species of photo-curable resin as the binder and contains water in an amount of 50% by weight or more based on the ink as the solvent.

6. An ink comprising at least a binder, a colorant and a solvent which contains at least one species of heat-curable resin as the binder and contains water in an amount of 50% by weight or more based on the ink as the solvent.

7. An ink according to claim 5, wherein the photo-curable resin contains a cinnamate.

8. A method for forming an image by ink jet process wherein an ink containing at least one species of photo-curable resin as a binder and water in an amount of 50% by weight or more based on the ink as a solvent is used, and the method includes a step of irradiating with light the image formed by adhesion of the ink.

9. A method for forming an image by ink jet process wherein an ink containing at least one species of heat-curable resin as a binder and water in an amount of 50% by weight or more based on the ink as a solvent is used, and the method includes a step of heating the image formed by adhesion of the ink.

10. A method according to claim 8, wherein the photo-curable resin contains a cinnamate.

11. An ink jet printer which has a light source used for irradiating an image formed by adhesion of ink with light.

12. An ink jet printer comprising at least an ink jetting device, a carrying roll for paper and a light source, wherein an ink is adhered by the ink jetting device on a paper carried by the carrying roll to form an image and then, the image is irradiated with light by the light source to fix the image.

13. An ink jet printer comprising at least an ink jetting device, a carrying roll for paper and a light source, wherein the light source is provided between the ink jetting device and the carrying roll for carrying the printed paper to the outside of the ink jet printer.

14. An ink jet printer according to claim 12, wherein the ink jetting device is made of a material having a transmittance of 2% or less for a light of 200 to 400 nm in wavelength.

15. An ink jet printer according to claim 12, wherein a condenser lens is fitted to the light source.
